# EUROPEAN PATENT APPLICATION

(11) **EP 3 879 028 A1**
(43) Date of publication of application: **15.09.2021**
(21) Application number: 21153303.9
(22) Date of filing: 25.01.2021
(51) Int. Cl.: D06M 15/55, D06P 1/44, B29C 70/34

(54) **COLORED BIOCOMPOSITE MATERIAL**

(30) Priority: 09.03.2020 IT 202000004906
(71) Applicant: Linificio e Canapificio Nazionale S.r.l., 36078 Valdagno (VI) (IT); Université de Franche-Comté, 25030 Besançon Cedex (FR)
(72) Inventor: FUSCO GIRARD, Perluigi, 36078 Valdagno, Vicenza (IT); PLACET, Vincent, 25030 Besançon Cedex (FR); BOTTURI, Debora, 36078 Botturi (IT)
(74) Representative: Long, Giorgio

(57) **Abstract**

The present invention relates to a colored biocomposite material (for example, dyed, printed or coated), in particular, a biocomposite fabric based on hemp and/or linen fibers and/or other natural fibers.

In particular, the present invention relates to a colored biocomposite material (for example, dyed, printed or coated) comprising a reinforcement substrate based on a material of plant or animal origin and a matrix based on a transparent resin, in which the reinforcement substrated is colored (for example, dyed, printed or coated) and comprises an inert pigment.

## Description

The present invention relates to a colored biocomposite material (for example, dyed, printed or coated), in particular, a biocomposite fabric based on hemp and/or linen fibers and/or other natural fibers.

### Background art

A composite is generally defined as a material consisting of a combination of constituents with significantly different chemical and physical properties. The synergy thereof leads to the creation of a new material with features different from the original constituents. A composite material may, for example, be formed by a reinforcement layer (generally in the form of fibers) and a matrix. The fibers give strength and rigidity to the material and are embedded in the matrix which ensures the transfer of the load between the fibers.

Conventionally, glass or carbon fibers with a polymeric matrix are used, although, recently, environmental reasons have renewed the interest in fibers of plant origin or, in general, of organic origin. These are fibers derived from plants or other agricultural, marine or forestry renewable sources. Natural fibers are fibers produced by plants (for example: cotton, jute, linen, hemp, viscose, modal, tencel), animals (for example: wool, cashmere, silk) and geological processes.

A common issue with the composite materials described above is the impossibility of obtaining bright colors. In fact, the impregnation of a substrate with a colored polymer matrix, and the consequent thermal treatment, tends to fade the colors. The same happens if the surface of the composite material obtained is colored. This problem negatively affects the possible uses of the material, excluding the use thereof as design products.

### Summary of the Invention

The problem addressed by the present invention is therefore that of providing a colored composite material provided with bright colors and which may therefore be used, for example, in design applications and for interior panels in the automotive sector.

Such a problem is overcome by a colored biocomposite material as delineated in the appended claims, the definitions of which form an integral part of the present description.

In particular, it is the object of the invention a colored biocomposite material, for example colored by dyeing, printing or coating, comprising a reinforcement substrate based on a material of plant origin, preferably selected from hemp, linen, cotton, tencel, viscose or modal, or of animal origin such as wool, cashmere and silk, and a matrix based on a transparent resin, in which the reinforcement substrate is colored and comprises an inert pigment.

It is another object of the invention a process for making the colored biocomposite material, comprising the following steps:
a) providing a reinforcement substrate based on a material of plant or animal origin in the form of a not colored single-layer or multi-layer;
b) coloring said reinforcement substrate with a colored organic pigment;
c) coating a mold with a layer of transparent resin;
d) arranging in the mold of step c) the reinforcement substrate of step b);
e) applying a further layer of transparent resin on said reinforcement substrate of step d);
f) repeating steps d) and e) until all the layers of reinforcement substrate have been arranged;
g) applying a thermo-compression to the reinforcement substrate arranged in the mold until the colored composite material is formed.

### Detailed description of the invention

The present invention relates to a colored biocomposite material comprising a reinforcement substrate based on a material of plant or animal origin and a matrix based on a transparent resin, wherein the reinforcement substrate is colored and comprises an inert pigment.

The reinforcement substrate may consist of short and long fibers, of nonwoven fabric, of multiaxial fabric, of warp-woven fabric, of a rectilinear as well as circular knitted fabric or of a ribbon. Preferably, the reinforcement substrate consists of a warp-woven fabric.

In preferred embodiments, the reinforcement substrate is a warp-woven fabric with a satin or twill weave, but, depending on the end uses, other constructions may be adopted.

The satin weave is a weave in which the warp and weft bindings are sparse and has a uniform appearance, shiny on the warp-dominant face and opaque on the weft-dominant face. A typical satin fabric is damask.

The twill weave is a weave with oblique ribs given by the waste of the "bindings" (i.e., the passage of a warp thread over a weft thread). For example, if the ratio is 1:2, a warp thread passes over a weft thread and then under two weft threads. Typical twill fabrics are denim (triple twill), batavia (quadruple twill), houndstooth design, tartan, tweed and gabardine.

The material of which the reinforcement substrate is made is preferably selected from hemp, linen, jute, natural fibers derived from cellulose (for example, cotton, modal, tencel, viscose), wool, cashmere, silk, fibers extracted from vegetable or proteinaceous biomasses and mixtures thereof. More preferably, the reinforcement substrate is made of hemp or linen.

In preferred embodiments, the reinforcement substrate is a warp-woven fabric with satin or twill weave, comprising a hemp and/or linen yarn obtained from a 0.32 g/mt hemp and/or linen wick twisted at 39 turns/mt.

Preferably, the reinforcement substrate is colored with an organic azoic pigment. Preferably, Printofix® T-N pigments of the company Archroma may be used. The pigment is preferably soluble in water or water/propylene glycol and may be formulated in a composition which contains binders, fixatives and other auxiliary agents. A suitable binder for this type of pigments is a poly (acrylonitrile-butadiene) copolymer, for example, the product Helizarin® SFT by Archroma.

The reinforcement substrate preferably comprises from 2 to 120 layers, more preferably from 2 to 100 layers, even more preferably from 2 to 25 superimposed layers of the materials described above.

In preferred embodiments, the transparent resin of the matrix is an epoxy resin. More preferably, the epoxy resin comprises 30% to 60% by weight of carbon from renewable sources (calculated from the ¹⁴C content, according to the standard process ASTM D6866). For example, the SR GreenPoxy 33 or SR GreenPoxy 56 resin, marketed by Sicomin (France), may be used.

The colored composite material of the invention may be obtained by means of a process comprising the following steps:
a) providing a reinforcement substrate based on a material of plant or animal origin, as defined above, in the form of a not colored single-layer or multi-layer;
b) coloring said reinforcement substrate with a colored inorganic pigment, as defined above;
c) coating a mold with a layer of transparent resin, as defined above;
d) arranging in the mold of step c) the reinforcement substrate of step b);
e) applying a further layer of transparent resin on said reinforcement substrate of step d);
f) repeating steps d) and e) until all the layers of reinforcement substrate have been arranged;
g) applying a thermo-compression to the reinforcement substrate arranged in the mold until the colored composite material is formed.

Preferably, the reinforcement substrate of step a) is a not colored single-layer formed by a hemp or linen fabric. More preferably, it is a hemp fabric with a satin or twill weave obtained from a 0.32 g/mt hemp wick twisted at 39 turns/mt.

The coloring step b) is preferably carried out using an organic pigment composition, as defined above, by means of process of printing, coating or dyeing and drying, or by means of a discontinuous wet or jigger process, i.e. by dipping the layer of reinforcement substrate in a solution of the pigment and thus making it dry.

The mold used in step c) is preferably lined with a Teflon sheet or with a different non-stick agent.

In preferred embodiments, the step g) of thermo-compression is carried out according to the following operating sequence:
- heating the mold up to a temperature of about 40°C at a speed of about 2°C/min to decrease the viscosity of the transparent resin and allow the complete impregnation of the reinforcement substrate with the transparent resin;
- applying pressure to the impregnated reinforcement substrate and raising the temperature up to about 80°C in about 15 min;
- maintaining the thermo-compression of the previous step for about an hour;
- cooling the mold and extracting the colored composite material.

Alternatively, the step g) may also be carried out with a different technique, such as the autoclave technique or resin transfer molding.

The colored composite material according to the invention solves the technical problem initially set, since it allows to obtain a bright and stable coloring.

For this reason, the colored biocomposite material of the invention may be used in the transport sector (automotive, aerospace, aeronautics, marine), in the energy production sector (wind power and turbines), in construction and infrastructure, as well as in sports equipment, in the luxury industry, in furniture, packaging and design in general.

Clearly only a few particular embodiments of the present invention have been described, so an expert skilled in the art will be able to make all of the necessary changes for the adaptation thereof to particular applications, without thereby departing from the scope of protection defined by the claims of the present invention.

## Claims

1. A colored biocomposite material comprising a reinforcement substrate based on a material of plant or animal origin and a matrix based on a transparent resin, wherein the reinforcement substrate is colored and comprises an inert pigment.

2. The biocomposite material according to claim 1, wherein the reinforcement substrate consists of short or long fibers, of nonwoven fabric, of multiaxial fabric, of warp-woven fabric, of a rectilinear as well as circular knitted fabric or of a ribbon.

3. The biocomposite material according to claim 2, wherein the reinforcement substrate is a warp-woven fabric with satin or twill weave.

4. The biocomposite material according to any one of claims 1 to 3, wherein the reinforcement substrate consists of a material chosen from hemp, linen, jute, natural protein fibers derived from cellulose, wool, cashmere, silk, fibers extracted from vegetable biomasses and mixtures thereof.

5. The biocomposite material according to claim 4, wherein the reinforcement substrate is a warp-woven fabric with satin or twill weave, comprising a hemp yarn obtained from a 0.32 g/mt hemp wick twisted at 39 turns/mt.

6. The biocomposite material according to any one of claims 1 to 5, wherein the reinforcement substrate is colored with an organic azoic pigment, preferably formulated in an aqueous or water/propylene glycol composition and comprising a binder.

7. The biocomposite material according to claim 6, wherein the binder is a poly (acrylonitrile-butadiene) copolymer.

8. The biocomposite material according to any one of claims 1 to 7, wherein the reinforcement substrate comprises from 2 to 120 superimposed layers or from 2 to 100 superimposed layers or from 2 to 25 superimposed layers.

9. The biocomposite material according to any one of claims 1 to 8, wherein the transparent resin of the matrix is an epoxy resin.

10. The biocomposite material according to claim 9, wherein the epoxy resin comprises 30% to 60% by weight of carbon from renewable sources (calculated from the ¹⁴C content, according to the standard process ASTM D6866).

11. A process for making the colored biocomposite material according to any one of claims 1 to 10, comprising the following steps:
a) providing a reinforcement substrate based on a material of plant or animal origin in the form of a not colored single-layer or multi-layer;
b) coloring said reinforcement substrate with a colored organic pigment;
c) coating a mold with a layer of transparent resin;
d) arranging in the mold of step c) the reinforcement substrate of step b);
e) applying a further layer of transparent resin on said reinforcement substrate of step d);
f) repeating steps d) and e) until all the layers of reinforcement substrate have been arranged;
g) applying a thermo-compression to the reinforcement substrate arranged in the mold until the colored composite material is formed.

12. The process according to claim 11 wherein:
i) step b) is carried out by means of a process of printing, dyeing or coating and drying, by discontinuous wet or jigger process, and/or
ii) the mold used in step c) is lined with a Teflon sheet or with a different non-stick agent, and/or
iii) step g) of thermo-compression is carried out according to the following operating sequence:
- heating the mold up to a temperature of about 40°C at a speed of about 2°C/min to decrease the viscosity of the transparent resin and allow the complete impregnation of the reinforcement substrate with the transparent resin;
- applying pressure to the impregnated reinforcement substrate and raising the temperature up to about 80°C in about 15 min;
- maintaining the thermo-compression of the previous step for about an hour;
- cooling the mold and extracting the colored composite material.
